# EUROPÄISCHE PATENTSCHRIFT

(11) **EP 1 273 138 B1**
(45) Veröffentlichungstag und Bekanntmachung des Hinweises auf die Patenterteilung: **11.03.2009**
(21) Anmeldenummer: 01940140.5
(22) Anmeldetag: 10.04.2001
(51) Int. Cl.: H04L 12/28, H04L 29/06, H04L 1/00

(54) **VERFAHREN ZUM ÜBERTRAGEN BREITBANDIGER IP-BASIERTER DATENSTRÖME IN EINEM PUNKT-ZU-MEHRPUNKT-KOMMUNIKATIONSNETZ**
METHOD FOR TRANSMITTING BROADBAND, IP-BASED DATA STREAMS IN A POINT-TO-MULTI-POINT COMMUNICATIONS NETWORK
PROCEDE DE TRANSMISSION DE FLUX DE DONNEES A LARGE BANDE ET BASES SUR IP DANS UN RESEAU DE COMMUNICATION POINT A MULTIPOINTS

(30) Priorität: 11.04.2000 DE 10017929
(43) Veröffentlichungstag der Anmeldung: 08.01.2003
(73) Patentinhaber: SIEMENS AKTIENGESELLSCHAFT, 80333 München (DE)
(72) Erfinder: ZIRWAS, Wolfgang, 82194 Gröbenzell (DE)
(86) Internationale Anmeldenummer: PCT/DE2001/001403
(87) Internationale Veröffentlichungsnummer: WO 2001/078321

(56) Entgegenhaltungen:
- EP-A- 1 022 884
- EP-A- 1 113 669
- WO-A-00/14699
- WO-A-00/48361
- WO-A-01/39576
- WO-A-01/50790

## Beschreibung

Die Erfindung bezieht sich auf ein Verfahren zum Übertragen breitbandiger, IP-basierter Datenströme in einem Punkt-zu-Mehrpunkt-Kommunikationsnetz und eine Einrichtung hierzu.

Kommunizieren nicht nur ein Sender und ein Empfänger, sondern jeweils mehrere wahlweise untereinander, so spricht man von einem Kommunikationsnetz. Die Kommunikation der Teilnehmer kann über galvanische bzw. optische Leiter oder über Funkwellen als Träger der Informationen erfolgen. Sind mobile Teilnehmer-Anschlußeinrichtungen über eine Funkschnittstelle in das Kommunikationsnetz integriert, handelt es sich um ein Mobilfunknetz. Wohlbekannte digitale Mobilfunknetze sind beispielsweise DECT (Digital European Cordless Telecommunications) und GSM (Global System for Mobile Communications). Im Aufbau begriffen ist das UMTS (Universal Mobile Telecommunikations System), ein Mobilfunksystem der 3. Generation, in welches erstgenannte Netze eingebunden sein werden. Weiterhin sind sogenannte drahtlose Teilnehmeranschlußnetze (Access Networks) bekannt, bei denen der Teilnehmeranschluß über die sogenannte letzte Meile durch eine Funkverbindung realisiert wird.

Eine Übertragung der Daten erfolgt entweder als Punkt-zu-Punkt-Übertragung (Unicasting) von einem Sender zu einem Empfänger oder als Punkt-zu-Mehrpunkt-Übertragung (Broadcasting) von einem Sender zu mehreren Empfängern. Letztere Übertragung ist typisch für Rundfunk und Fernsehen und wird zunehmend auch für Telematik-Dienste in Mobilfunk- und Teilnehmeranschlußsystemen eingesetzt. Heute noch bezeichnend für eine Punkt-zu-Mehrpunkt-Übertragung in einem Mobilfunknetz ist der unidirektionale Verkehr, nämlich von einem bestimmten Sender zu jeweils einer mobilen Teilnehmerstation bzw. Teilnehmer-Anschlußeinrichtung. Hierzu beschreibt die WO-A-0014699 ein Kommunikationssystem für IP-Datenströme über Funksatellitenstrecken, bei dem ein Computersystem auf Anforderung Daten an Benutzersysteme sendet.

In den sich weiterentwickelnden und zukünftigen Kommunikationsnetzen werden die zu übertragenden Datenmengen stark anwachsen. Ursache hierfür sind zum Beispiel höhere Qualitätsanforderungen für Fernsehübertragungen (HDTV) und stark zunehmender Internetverkehr, wie WWW (World Wide Web), das über eine graphische Benutzeroberfläche verfügt, FTP (File Transfer Protocol), E-Mail (Electronic Mail) oder elektronische Zeitung. Diese Dienste beruhen auf einer paketorientierten Übertragung von Daten und verlangen im allgemeinen aufgrund der Art der zu übermittelnden Informationen und der zu übertragenden großen Datenmengen geringe Verzögerungszeiten und hohe Übertragungsraten, worunter die Menge der zu übertragenden Datensymbole (Bit) je Zeiteinheit zu verstehen ist. Während heutige Funk-Kommunikationsnetze - wie GSM - für einfache Sprach- und Datendienste noch mit einer niederratigen Datenübertragung von etwa 10 kbit/s ausgelegt sind, das drahtgebundene digitale EURO-ISDN-Netz mit einer Übertragungsgeschwindigkeit von 64 kbit/s oder bei einer Bündelung zweier Kanäle mit 128 kbit/s aufwartet, werden in zukünftigen Kommunikationssystemen für besonders anspruchsvolle Dienste, wie Audio-Sendungen, Videokonferenzen, Bildfernsprechen oder Fernsehen, extrem hochratige Übertragungen von 20 Mbit/s, 50 Mbit/s und langfristig auch darüber hinaus angepeilt.

Nach den derzeit bekannten Datenübertragungsverfahren sind hierzu Übertragungskanäle mit sehr großer Bandbreite von 2 GHz bis zum zweistelligen GHz-Bereich erforderlich. Selbst unter Berücksichtigung, daß z. B. auf Glasfaserleitungen und der Funkschnittstelle hierfür Frequenzbereiche im 100 THz-Bereich und mehr nutzbar sind, wird schnell klar, daß in Anbetracht des explosionsartigen Teilnehmerzuwachses bei allen Fortschritten in der Mehrfachnutzung von Kanälen (Multiplexing) die Ressourcen in zukünftigen festen und mobilen Breitbandsystemen möglichst effizient auszulasten sind, um einer Netzüberlastung zu begegnen.

Innerhalb des weltumspannenden Computernetzwerkes Internet ist eine Erweiterung des normalen Internet-Protokolls (IP) für eine Gruppenkommunikation bekannt, nämlich die Multicast-Adressierung. Eine Multicast-Adresse bezeichnet nicht einen einzelnen Rechner, sondern eine zu einem lokalen Netzwerk (Local Area Network LAN) zusammengefaßte Gruppe von Rechnern. Das erweiterte Internet-Protokoll IP-Multicast stellt hierfür einen Mechanismus zur Verfügung, nach welchem komprimierte und digitalisierte Daten von einem Server nicht an jeden einzelnen Rechner des LAN eine Kopie seiner Daten sendet, sondern nur einmal an die Multicast-Adresse des LAN. Bei Interesse an einem Audio- und/oder Video-Datenangebot meldet sich ein Mitglied also nicht mehr beim Server, sondern im LAN an.

Da herkömmliche IP-Router, die für die Verbindung der einzelnen LANs zum Internet notwendig sind, nicht multicastfähig sind, bleiben multicastfähige Teilnetze als Multicasting-Inseln isoliert im Internet. Für eine Verbindung dieser Inseln wurden Tunneling-Mechanismen entwickelt, mit deren Hilfe ein weltumspannendes Multicast-Netz unter der Bezeichnung MBone (Multicast Backbone) entstanden ist. Die Audio-, Video- und Datenkanäle werden von den Routern des Netzwerkes selbst entsprechend der Anzahl der anfordernden Empfängern vervielfacht und über eine Art Baumstruktur von Netzknoten zu Netzknoten abwärts bis zu den empfangswilligen Rechnern geschaltet. Hierdurch muß also nur das von den in der Baumstruktur benachbarten Rechnern bzw. Routern angeforderte Datenaufkommen transportiert werden und nicht eine unter Umständen völlig unnötige Datenlast allen Rechnern gleichzeitig angeboten werden. Das System vermeidet damit wirksam, daß ungenutzter oder mehrfach identischer Datenverkehr den gleichen Netzabschnitt durchzieht und hilft damit, Ressourcen einzusparen. Anwendung findet der MBone beispielsweise in der synchronen Kommunikation, wie interaktive Mehrparteien-Konferenzen, Lehrveranstaltungen usw.

Die zu übertragenden hohen Datenraten und die breitbandigen Echtzeitdienste mit der Forderung nach geringen Latenzzeiten erfordern auch eine neue Qualität zukünftiger Funkkommunikationsnetze. Während durch den zügigen Ausbau photonischer Netze die Engpässe im Kernnetz von geringerer Bedeutung sein dürften, stellt der Zugriff auf die Daten über die Funkschnittstelle einen fast unüberwindbaren Engpaß dar.

Der Erfindung liegt daher die Aufgabe zugrunde, die Vorteile eines Multicasting-Netzwerkes auch für ein Mobilfunksystem nutzbar zu machen, um dem vorauszusehenden gewaltigen Anstieg der zu übertragenden Datenmengen zu begegnen, was neue Lösungen im Datenzugriff verlangt.

Die Aufgabe wird erfindungsgemäß durch die im Anspruch 1 angegebenen Merkmale für ein Verfahren und die im Anspruch 12 angegebenen Merkmale für eine Einrichtung zur Durchführung des Verfahrens gelöst.

Erfindungsgemäß wird in den Funkzellen eines Funknetzes ein universeller Multicast-Kanal für die Übertragung IP-basierter Multicast-Daten an die teilnehmerseitigen Anschlußeinrichtungen eingerichtet. Eine empfangswillige teilnehmerseitige Anschlußeinrichtung meldet einen von ihr gewünschten IP-basierten Datenstrom bei der ihr zugeordneten Basisstation an, und die Basisstation teilt ihr die Kennung für den gewünschten Datenstrom mit. Für den Fall, daß mehrere teilnehmerseitige Anschlußeinrichtungen denselben IP-basierten Datenstrom anfordern, muß der Datenstrom von der Basisstation also lediglich einmal über den erfindungsgemäßen Multicast-Kanal gesendet ("gebroadcastet") werden. Die einzelnen teilnehmerseitigen Anschlußeinrichtungen filtern sich den jeweiligen gewünschten Datenstrom anhand der Kennung der betreffenden IP-Datenpakete aus dem Multicast-Kanal heraus. Für den Fall, daß überhaupt keine Anschlußeinrichtung einer Funkzelle einen IP-basierten Datenstrom anfordert, muß auf dem Multicast-Kanal auch nicht gesendet werden.

Mit der Erfindung rückt zugleich die technische Realisierung eines einheitlichen, allumfassenden Kommunikationsnetzes unter Einschluß aller Verteildienste auf den verschiedensten Bereichen in greifbare Nähe, und es lassen sich innerhalb des Szenarios alle Möglichkeiten interaktiver Dienste nutzen. Dies führt in Kombination mit den bereits vorhandenen und zukünftigen riesigen Datenbank-Archiven und weltumspannenden Nachrichtendiensten zu völlig neuen Möglichkeiten sowohl in der internationalen Zusammenarbeit als auch im internationalen Wettbewerb.

Die bisher genutzten terrestrischen Fernseh- und Rundfunkfrequenzen werden frei und können wirtschaftlicher genutzt werden, nämlich nicht mehr nur für einen Dienst, sondern für beliebige Dienste mittels drahtlosem, schnellen Internet-Zugriff. Dies erhöht zugleich die Wirtschaftlichkeit für den Dienstanbieter.

Heute praktiziertes interaktives Fernsehen, bei welchem Dienste aus zwei unterschiedlichen Netzen auf einer gemeinsamen Nutzeroberfläche virtuell integriert werden, mag die Bedürfnisse der Informationsanbieter bereits in vieler Hinsicht befriedigen, erlaubt aber nicht eine so vielfältige Nutzung wie eine real integrierte Lösung.

Es sollte auch nicht übersehen werden, daß eine weitere Nutzung getrennter Netze das Monopol der Rundfunk- und Fern-sehanbieter für die Verteilung von "Life events" in hoher Qualität zementiert. Dies widerspricht dem Grundgedanken der vollen Informationsfreiheit im Internet. Langfristig wird es also möglich sein, eine beliebige örtliche Veranstaltung in ein einheitliches Kommunikationsnetz zu bringen, ohne hierfür einen Fernsehsender in Anspruch nehmen zu müssen.

Zwar mildern Offline-Übertragungen und lokale Speicherungen von z.B. Bewegtbilder-Sequenzen das Problem, sehr hohe Datenraten übertragen zu müssen, doch ist damit im allgemeinen die geforderte Aktualität nicht mehr gegeben. Diese ist aber für sehr viele Teilnehmer außerordentlich bedeutsam. Außerdem ist für diese Technik ein erheblicher zusätzlicher Bedienungsaufwand erforderlich.

Mit Einführung der Erfindung kann in vorteilhafter Weise die digitale Übertragung von Radioprogrammen (Digital Audio Broadcasting DAB) durch DAB-Internet (DAB-I) und von Fernsehprogrammen (Digital Video Broadcasting DVB) durch DVB-Internet (DVB-I) ersetzt werden. Satelliten-Direktempfang wird es dann mehr und mehr nur noch in dünn besiedelten Gegenden geben.

Ein weiterer Vorteil der Erfindung ist, daß alle Teilnehmer-Anschlußeinrichtungen für alle Dienste mit nur einem einzigen gemeinsamen Kommunikationsnetz unter Verwendung des gleichen Datenformates (IP-Datenpakete) über eine einheitliche Funkschnittstelle kommunizieren, sei es ein Fernsehgerät, ein Handy, eine industrielle Prozeß-Steuerung, eine Hausalarmanlage oder ein Mikrowellenherd.

Die Verwendung einer einheitlichen Technologie ohne die Notwendigkeit von Spezialnetzen für die einzelnen Dienste, wie es heute notwendig ist, wird längerfristig auch zu einer Kostenoptimierung führen.

Die Erfindung soll anhand eines Ausführungsbeispiels näher erläutert werden.

In der zugehörigen Zeichnung zeigt:
- Fig. 1. bis 3: Beispiele für bekannte Netzkonfigurationen von Punkt-zu-Mehrpunkt-Verbindungen und
- Fig. 4: die Multicast-Konfiguration eines erfindungsgemäßen Mobilfunknetzes.

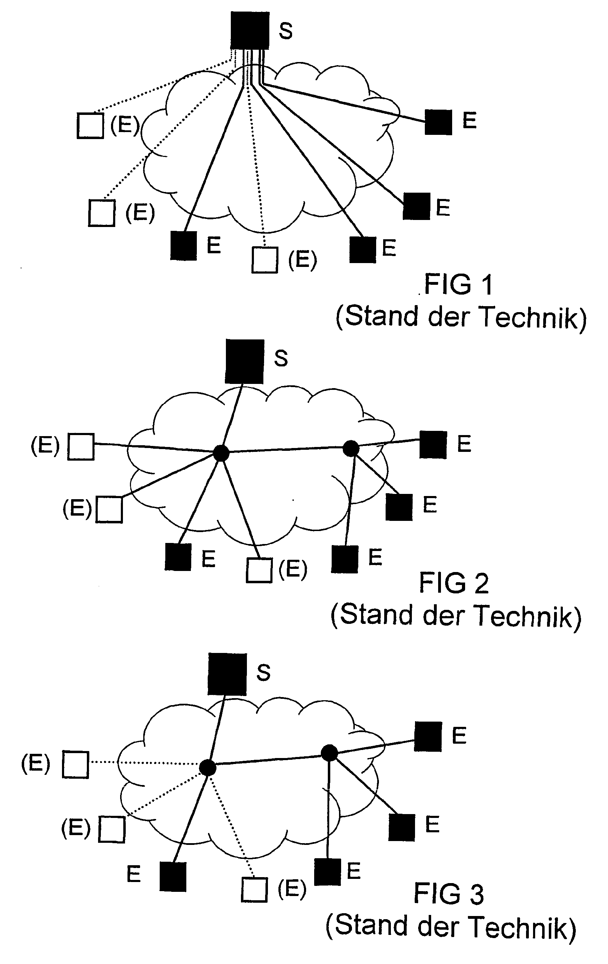

In Fig. 1 ist schematisiert eine Unicast-Konfiguration einer Punkt-zu-Mehrpunkt-Kommunikationsverbindung dargestellt. Unter Punkt-zu-Mehrpunktvernbindung soll die Möglichkeit der Übertragung von Informationen von einem Sender S zu mehreren Empfängern E verstanden werden.

Zu jedem Empfänger E eines Unicast-Systems wird vom Sender S eine eigene Verbindung aufgebaut, über welche die zu verbreitenden Daten gesendet werden. Mit steigender Benutzerzahl steigt auch die Netzbelastung linear an. Auch für den Sender S selbst entsteht eine hohe Last, weil er die Daten für jeden Empfänger E einzeln zur Verfügung stellen und die gewünschten Informationen aus der Gesamtangebot herausfiltern müssen. Als Beispiel einer Anwendung der Unicast-Konfiguration kann der Telefonverkehr via Internet angegeben werden.

Fig. 2 zeigt schematisiert eine Broadcast-Konfiguration eines Kommunikationsnetzes. Danach schickt der Sender S an alle angeschlossenen Empfänger E gleichzeitig ein und denselben Datenstrom. Broadcasting ist beispielsweise typisch für Rundfunk und Fernsehen. In einem Mobilfunksystem "broadcasten" heutzutage Telematikdienste Kurznachrichten u.a. Informationen. Genannte Konfiguration führt zu einem ungewollten Datenaufkommen, wenn lediglich eine Untermenge der angeschlossenen Empfänger E an den Daten interessiert ist, was die Regel sein dürfte. Je kleiner diese Untermenge ist, desto mehr Ressourcen werden verschwendet.

Fig. 3 zeigt schließlich schematisch eine Multicast-Konfiguration. Der Sender S schickt einen einzigen Datenstrom aus. Jeder empfangswillige Empfänger E meldet sich bei seinem Netzknoten. Diese leiten bei Bedarf den Datenstrom zu den Empfängern E bzw. vervielfältigen ihn. Der große Vorteil liegt darin, daß lediglich das Nutzdatenaufkommen transportiert wird. Multicasting wird in lokalen Netzwerken und beim System MBone im Internet eingesetzt. Der Datenstrom wird nur einmal vom Server an alle Client-Programme übertragen. Die gegebenenfalls notwendige Vervielfältigung des Datenstroms übernehmen Multicast-Router.

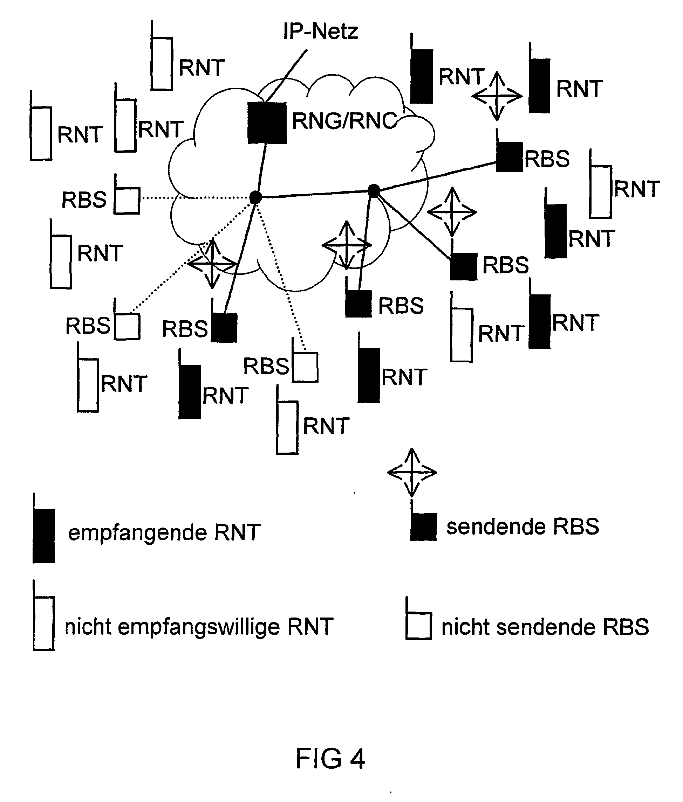

In Fig. 4 ist schematisch eine Multicast-Konfiguration für ein Mobilfunknetz gemäß der Erfindung angegeben. Im Beispiel ist ein RNG/RNC (Radio Network Gateway/Radio Network Controller) mit einem IP-Netz verbunden und bezieht auf Anforderung sämtliche im IP-Netz verfügbaren und für ihn freigegebenen Informationen.

Das Internet-Protokoll (IP) stellt hierzu Datenpakete in einem einheitlichen Format zur Verfügung, denen jeweils eine bestimmte nachrichtentechnische Bedeutung zukommt. Die Datenpakete werden unabhängig voneinander auf dem Wege von einem Sender zu einem Empfänger geroutet und zwar paketvermittelt, wonach jedes Datenpaket prinzipiell einen anderen Weg nehmen kann, oder mittels virtueller Leitungsvermittlung, die einen Kompromiß zwischen Leitungs- und Paketvermittlung realisiert. Es ist deshalb notwendig, die Datenpakete zu kennzeichnen. Hierzu sind jedem Datenpaket Signalisierungsinformationen hinzugefügt. Die Signalisierungsinformationen beinhalten unter anderem eine in vier Klassen eingeteilte Internet-Adresse, wobei Klasse D mit den Adressen-Anfangsnummern 224 bis 239 für Multicast-Verbindungen benutzt wird.

Der IP-basierte Datenstrom wird an den betreffenden Netzknoten der Baumstruktur des Mobilfunk-Netzwerks vervielfältigt, an welche empfangswillige teilnehmerseitige Anschlußeinrichtungen RNT (Radio Network Terminations) angeschlossen sind, und die betreffenden Basisstationen RBS (Radio Base Stations) "broadcasten" die im Bereich ihrer Funkzelle von mindestens einer Anschlußeinrichtung RNT gewünschten Daten. An Knoten und Basisstationen RBS, an die derzeit keine Anschlußeinrichtungen RNT angeschlossen sind, die den betreffenden IP-basierten Datenstrom empfangen wollen, wird der Datenstrom nicht transportiert. Der Begriff Anschlußeinrichtung soll dabei stellvertretend für jede Art multicastfähiger Teilnehmer-Endgeräte stehen, die in das Mobilfunksystem integrierbar sind und IP-basierte Daten über Funk empfangen können, beispielsweise also hierfür ausgerüstete Mobilstationen, ortsfeste Teilnehmerstationen, Notebooks, Fernsehgeräte oder intelligente Haushaltgeräte. Entscheidend ist, daß alle teilnehmerseitigen Anschlußeinrichtungen RNT das gleiche Datenformat (IP-Datenpakete) verwenden und in einem einheitlichen IP-basierten Netz nach einer einheitlichen Technologie kommunizieren.

Im einfachsten Fall werden alle Signale in Richtung zu den teilnehmerseitigen Anschlußeinrichtungen RNT in einem einzigen Breitbandsignal beispielsweise im Zeitmultiplex gebündelt.

Der Wunsch eines Teilnehmers nach z. B. einem bestimmten TV-Programm wird mittels einer geeigneten Signalisierung zur Basisstation RBS übertragen. Diese fordert das gewünschte TV-Programm für den Teilnehmer im IP-Fremdnetz an und speichert eine Information über das gewählte TV-Programm in einem Register ab. Vor der Weitergabe der Daten an die Anschlußeinrichtung RNT kennzeichnet die Basisstation RBS alle zu diesem TV-Programm gehörigen IP-Datenpakete im Header durch einen speziellen Eintrag.

Die Basisstation RBS kann sich also merken, daß ein Teilnehmer ein bestimmtes TV-Signal gewählt hat. Will ein weiterer Teilnehmer- des Netzes dasselbe TV-Programm empfangen, so informiert die Basisstation RBS ihre Anschlußeinrichtung, in diesem Falle eine hierfür ertüchtigte Videosignal-Empfangseinrichtung, über die zugehörige Kennung der dieses TV-Programm enthaltenden IP-Datenpakete. Die Signalisierungs-Informationen können dabei bidirektional beispielsweise in speziellen IP-Paketen mit nur lokal im Netz definierten Adressen übertragen werden. Da diese in Punkt-zu-Mehrpunkt-Systemen ohnehin zu allen teilnehmerseitigen Anschlußeinrichtungen RNT übertragen werden, kann die entsprechende Basisstation RBS die zu dem gewünschten TV-Programm gehörigen IP-Datenpakete aussortieren, dekodieren und dem Teilnehmer in geigneter Weise für die Wiedergabe auf seiner Anschlußeinrichtung RNT zur Verfügung stellen. Somit müssen für den oder die weiteren Teilnehmer, die an einem bereits gesendeten TV-Programm interessiert sind und sich hierfür bei der Basisstation RBS angemeldet haben, keine neuen Kanäle belegt werden.
Die Basisstation RBS übernimmt erfindungsgemäß die Funktion eines intelligenten, ortsfesten Agenten für die Beschaffung, Verwaltung und lokale Verteilung von Verteilinformationen, welche selbstverständlich auch anderer Art als die lediglich beispielhaft angegebenen TV-Programme sein können. Unter Agent ist dabei ein ggf. lernfähiges Programm bzw. eine Softwareeinheit oder auch eine Hardwareeinheit zu verstehen, die in der Lage ist, bestimmte Operationen im Auftrage eines Teilnehmers oder eines anderen Agenten anhand von Entscheidungsalgorithmen zu erledigen.

Prinzipiell kann jede Art von Datenstrom aus dem Internet verteilt werden, wie zum Beispiel Musik, Push-Information, Werbung. Dabei kann die Basisstation RBS auch auf Wunsch der Teilnehmer eine Filterfunktion ausüben, zum Beispiel unerwünschte Werbung unterdrücken, falls diese in der Basisstation RBS als solche erkannt werden kann.

## Patentansprüche

1. Verfahren zum Übertragen breitbandiger, IP-basierter Datenströme in einem Punkt-zu-Mehrpunkt-Kommunikationsnetz,
**dadurch gekennzeichnet, dass**
- in den Funkzellen des Kommunikationsnetzes ein universeller Multicast-Känal für die Übertragung breitbandiger, IP-basierter Multicast-Datenströme von einer Basisstation (RBS) zu teilnehmerseitigen Anschlußeinrichtungen (RNT) zur Verfügung gestellt wird und
- empfangswillige teilnehmerseitige Anschlußeinrichtungen (RNT) erwünschte Datenströme bei der Basisstation (RBS) anmelden und die Basisstation (RBS) ihnen eine Kennung für die erwünschten Datenströme mitteilt.

2. Verfahren nach Anspruch 1, bei dem
für den Fall, daß mehrere teilnehmerseitige Anschlußeinrichtungen (RNT) denselben Datenstrom anfordern, der Datenstrom von der Basisstation (RBS) an die teilnehmerseitigen Anschlußeinrichtungen (RNT) lediglich einmal auf dem Multicast-Kanal gesendet wird.

3. Verfahren nach Anspruch 2, bei dem
die teilnehmerseitigen Anschlußeinrichtungen (RNT) anhand der Kennung der IP-Datenpakete die von ihnen erwünschten Datenströme aus dem Multicast-Kanal herausfiltern.

4. Verfahren nach einem der vorstehenden Ansprüche, bei dem in einem Register oder einer Datenbasis einer Basisstation (RBS) eine Information über einen von einer teilnehmerseitigen Anschlußeinrichtung (RNT) gewählten Datenstrom gespeichert wird.

5. Verfahren nach einem der vorstehenden Ansprüche, bei dem die Basisstation (RBS) alle zu einem angeforderten Datenstrom gehörigen IP-Datenpakete vor der Weitergabe in Richtung zu der teilnehmerseitigen Anschlußeinrichtung (RNT) durch einen Eintrag im Kopf der IP-Datenpakete markiert.

6. Verfahren nach Anspruch 5, bei dem
bei weiteren Anforderungen eines bereits auf dem Multicast-Kanal gesendeten Datenstroms den anfordernden teilnehmerseitigen Anschlußeinrichtungen (RNT) die Kennung der den Datenstrom enthaltenen IP-Datenpakete von der Basisstation (RBS) mitgeteilt werden.

7. Verfahren nach Anspruch 6, bei dem
Signalisierungsinformationen zwischen einer Basisstation (RBS) und den Anschlußeinrichtungen (RNT) in speziellen IP-Paketen mit lokal im Netz definierten Adressen übertragen werden.

8. Verfahren nach einem der vorstehenden Ansprüche, bei dem auf dem Multicast-Kanal IP-basierte Datenströme unter Verwendung einer Zeitmultiplex-Komponente gebündelt werden.

9. Verfahren nach einem der vorstehenden Ansprüche, bei dem über den Multicast-Kanal eine digitale Übertragung von Radioprogrammen (Digital Audio Broadcasting) und/oder Fernsehprogrammen (Digital Video Broadcasting) erfolgt.

10. Verfahren nach einem der vorstehenden Ansprüche, bei dem in einer Basisstation (RBS) ein intelligenter, ortsfester Agent die Beschaffung, Verwaltung, Filterung, Verteilung und/oder Abrechnung der Datenströme übernimmt.

11. Einrichtung zum Übertragen breitbandiger, IP-basierter Datenströme in einem Punkt-zu-Mehrpunkt-Kommunikationsnetz, **dadurch gekennzeichnet, dass** Mittel zur Durchführung des Verfahrens gemaß Anspruch 1 vorgesezhen sind.

12. Einrichtung nach Anspruch 11, wobei
das Kommunikationssystem als ein Mobilfunksystem oder als ein drahtloses Teilnehmeranschlußsystem verwirklicht ist.

## Claims

1. Method for transmitting broadband, IP-based data streams in a point-to-multipoint communications network, **characterized**
**in that**
- a universal multicast channel for the transmission of broadband, IP-based multicast data streams from a base station (RBS) to subscriber-end access devices (RNT) is provided in the radio cells of the communications network and
- subscriber-end access devices (RNT) which wish to receive register desired data streams with the base station (RBS), and the base station (RBS) tells them an identifier for the desired data streams.

2. Method as claimed in Claim 1, in which,
in the situation where a number of subscriber-end access devices (RNT) request the same data stream, the data stream is sent only once from the base station (RBS) to the subscriber-end access devices (RNT), on the multicast channel.

3. Method as claimed in Claim 2, in which
the subscriber-end access devices (RNT) use the identifier for the IP data packets to filter the data streams desired by them out of the multicast channel.

4. Method as claimed in one of the preceding claims, in which information relating to a data stream which has been chosen by a subscriber-end access device (RNT) is stored in a register or in a database in a base station (RBS).

5. Method as claimed in one of the preceding claims, in which the base station (RBS) marks all the IP data packets which are associated with a requested data stream by means of a header in the IP data packets before passing them on in the direction of the subscriber-end access device (RNT).

6. Method as claimed in Claim 5, in which
in the event of further requests for a data stream which has already been sent on the multicast channel, the base station (RBS) tells the requesting subscriber-end access devices (RNT) the identifier of the IP data packets which contain the data stream.

7. Method as claimed in Claim 6, in which
signaling information is transmitted between a base station (RBS) and the access devices (RNT) in specific IP packets with addresses which are defined locally in the network.

8. Method as claimed in one of the preceding claims, in which IP-based data streams are bundled on the multicast channel using a time-division multiplex component.

9. Method as claimed in one of the preceding claims, in which digital transmission of radio programs (Digital Audio Broadcasting) and/or television programs (Digital Video Broadcasting) take place or takes place via the multicast channel.

10. Method as claimed in one of the preceding claims, in which an intelligent, fixed-position agent in a base station (RBS) takes over the procurement, administration, filtering, distribution and/or billing for the data streams.

11. Device for transmitting broadband, IP-based data streams in a point-to-multipoint communications network, **characterized in that** means for carrying out the method are provided, as claimed in Claim 1.

12. Device as claimed in Claim 11, in which
the communications system is in the form of a mobile radio system or a wire-free subscriber access system.

## Revendications

1. Procédé pour la transmission de flux de données à large bande et basés sur IP, dans un réseau de communication point à multipoints,
**caractérisé en ce que**
- dans les cellules radio du réseau de communication, un canal de multidiffusion universel est mis à disposition pour la transmission de flux de données de multidiffusion à large bande basés sur IP d'une station de base (RBS) à des dispositifs de raccordement (RNT) côté abonné et
- des dispositifs de raccordement (RNT) côté abonné prêts pour une réception demandent des flux de données souhaités auprès de la station de base (RBS) et la station de base (RBS) leur communique un code pour les flux de données souhaités.

2. Procédé selon la revendication 1, dans lequel,
dans le cas où plusieurs dispositifs de raccordement (RNT) côté abonné demandent le même flux de données, le flux de données est envoyé une seule fois sur le canal de multidiffusion de la station de base (RBS) aux dispositifs de raccordement (RNT) côté abonné.

3. Procédé selon la revendication 2, dans lequel les dispositifs de raccordement (RNT) côté abonné filtrent à l'aide du code des paquets de données IP les flux de données qu'ils souhaitent à la sortie du canal de multidiffusion.

4. Procédé selon l'une quelconque des revendications précédentes, dans lequel une information concernant un flux de données choisi par un dispositif de raccordement (RNT) côté abonné est mémorisée dans un registre ou une base de données d'une station de base (RBS).

5. Procédé selon l'une quelconque des revendications précédentes, dans lequel la station de base (RBS) repère tous les paquets de données IP appartenant à un flux de données demandé, avant la transmission en direction du dispositif de raccordement (RNT) côté abonné, par une inscription dans l'entête des paquets de données IP.

6. Procédé selon la revendication 5, dans lequel dans le cas d'autres demandes d'un flux de données déjà envoyé sur le canal de multidiffusion, le code des paquets de données IP contenant le flux de données est communiqué par la station de base (RBS) aux dispositifs de raccordement (RNT) côté abonné demandeurs.

7. Procédé selon la revendication 6, dans lequel des informations de signalisation sont transmises entre une station de base (RBS) et les dispositifs de raccordement (RNT) dans des paquets IP spéciaux avec des adresses définies localement dans le réseau.

8. Procédé selon l'une quelconque des revendications précédentes, dans lequel
des flux de données basés sur IP sont concentrés sur le canal de multidiffusion en utilisant un composant de multiplexage temporel.

9. Procédé selon l'une quelconque des revendications précédentes, dans lequel
une transmission numérique de programmes radio (Digital Audio Broadcasting) et/ou de programmes de télévision (Digital Video Broadcasting) s'effectue au moyen du canal de multidiffusion.

10. Procédé selon l'une quelconque des revendications précédentes, dans lequel
un agent intelligent et local assume l'acquisition, la gestion, le filtrage, la diffusion et/ou le décompte des flux de données dans une station de base (RBS).

11. Dispositif pour la transmission de flux de données à large bande et basés sur IP dans un réseau de communication point à multipoints,
**caractérisé en ce que** des moyens sont prévus pour la mise en oeuvre du procédé selon la revendication 1.

12. Dispositif selon la revendication 11,
le système de communication étant réalisé sous la forme d'un système de téléphonie mobile ou sous la forme d'un système de raccordement d'abonné sans fil.
